# EUROPEAN PATENT SPECIFICATION

(11) **EP 3 488 664 B1**
(45) Date of publication and mention of the grant of the patent: **11.12.2019**
(21) Application number: 17734743.2
(22) Date of filing: 03.07.2017
(51) Int. Cl.: H05B 3/84, B60R 1/12

(54) **HEATER PAD, HEATING AND LIGHTING UNIT, GLASS ASSEMBLY AND REARVIEW MIRROR DEVICE**
HEIZPAD, HEIZ- UND BELEUCHTUNGSEINHEIT, GLASANORDNUNG UND RÜCKSPIEGELVORRICHTUNG
PATIN CHAUFFANT, UNITÉ DE CHAUFFAGE ET D'ÉCLAIRAGE, ENSEMBLE EN VERRE ET DISPOSITIF À RÉTROVISEUR

(30) Priority: 22.07.2016 DE 102016113608
(43) Date of publication of application: 29.05.2019
(73) Proprietor: SMR Patents Sarl, 2453 Luxembourg (LU)
(72) Inventor: LITTLE, Andrew Brian, Havant Hampshire PO9 5BJ (GB); SAILER, Gottfried, 73733 Esslingen (DE); HERRMANN, Andreas, 71364 Winnenden-Baach (DE)
(74) Representative: Weber-Bruls, Dorothée
(86) International application number: PCT/EP2017/066531
(87) International publication number: WO 2018/015137

(56) References cited:
- WO-A2-00/23826
- WO-A2-2008/051910
- US-A1- 2002 171 954

## Description

The present invention relates to a heater pad, a heating and lighting unit, a glass assembly and a rearview mirror device. The heater pad comprises a circuit comprising at least one heating line and being connectable with a power source and/or a control unit, at least one recess into which a light module is to be inserted, and contacts for contacting a printed circuit board of the light module.

Light modules for rearview mirrors are well known. EP 2 444 283 A2 describes a light module for displaying a signal in a rearview mirror of a motor vehicle including a circuit carrier, at least one light source disposed on the circuit carrier and a power supply circuit. The power supply circuit is for connecting the circuit carrier to an interface that is disposed at a distance from the circuit carrier and that leads to at least one of a control unit and a current or voltage source. The power supply circuit and circuit carrier are made of the same material, are configured in one piece and are formed by a flexible printed circuit board. The known light module is provided with its own contacts at one end of a strip-shaped printed conductor the other end of which connects to the at least one light source on the circuit carrier of the light module. EP 2 444 283 A2 also discloses a surface heating film of the rearview mirror which has a recess in the region of a signal display window of the rearview mirror. The circuit carrier can be brought into said window and recess by folding the strip-shaped printed conductor over. This leads to a complicated structure.

US 6,657,767 B2 discloses a rearview mirror assembly which includes a circuit board disposed behind the mirror. The circuit board may be a flexible circuit board and may include an LED mounted to project light through a transparent window in the flexible circuit board and through the mirror. The flexible circuit board may function as a mirror heater and may include conductive paths for connection to the LED and/or electrodes of an electrochromic mirror. The LED may include an LED chip mounted directly on the circuit board and encapsulated thereon by an encapsulant.

A further automobile rearview mirror heating and indicating lamp structure is described in CN 203402150. The back side of the automobile rearview mirror glass is provided with a heating plate provided with a through hole. An LED indicating lamp plate is embedded in the through hole of the heating plate.

A method to manufacture an LED is described in US 2007/0295970 A1, with a first step to prepare multiple illuminating devices where each of them has a first contact area and a second contact area. The illuminating devices are respectively mounted on and electrically connected to pairs of corresponding fingers by conductive adhesive. A protective film is coated over the base apparatus to cover the illuminating devices and the connected fingers. Finally, the base apparatus is either cut or diced to separate the illuminating devices so that several individual LEDs are completed. When the individual LED is mounted onto a substrate, the LED can be mounted on the substrate by its side so that an entire assembly height of the LED is reduced and is equal to the width of the LED, i.e. the width of the finger. The entire assembly height of the LED is in the range of 50 to 100 micrometers when the LED is mounted on the substrate.

Also the production of heaters for rearview mirrors is known in the art. EP 2 315 495 A1 discloses a process to apply a heater function onto a plastic glass substrate by inserting the plastic glass substrate into a sputtering process chamber; cleaning the surface of the substrate by a dry etching step; preparing a copper target in a pre step; sputtering copper onto the surface; removing the layered substrate from the sputtering process chamber; and inscribing tracks onto the layered surface with a laser beam.

DE 10 2012 108 592 B3 teaches a rearview mirror that has a disk-shaped reflection unit which has an electrically conductive coating. A holding plate supporting the reflection unit has a recess, and a display unit is fixed in the recess of the holding plate. Said display unit has an electronic unit, a lighting unit and a light guiding body guiding the light of the lighting unit to the reflection unit. US2002/171954 shows a heater pad of the prior art. There is a need for thin electronic components in particular in rearview mirrors, which have a simple structure and are stable.

The present invention further develops a heater pad, comprising a circuit comprising at least one heating line and being connectable with a power source and/or a control unit, at least one recess into which a light module is to be inserted, and contacts for contacting a printed circuit board of the light module, in that the circuit is electrically connectable to the printed circuit board of the light module, which has no power stripes, via the contacts, which are provided in an area overlapping and holding the light module. This heater pad is extremely thin as no plugs for contacts of the light module which is inserted into the recess of the heater pad is needed, whereas stability is still provided due to the fact that a region of the heater pad, which is partly overlapping the inserted light module to ensure a contact also holds the light module.

It is preferred that said heater pad comprises contacts for contacting a printed circuit board of the light module, and/or power stripes to be connected to the printed circuit board of the light module.

It is also proposed according to the invention that the recess comprises a through hole, and the area is in form of an extension or shoulder next to the recess.

With the invention also a heating and lighting unit is provided, which comprises a heater pad according to the invention and a light module having a, preferably flexible, printed circuit board with at least one LED and having no power stripes, wherein the light module is inserted into the recess of the heater pad, and the printed circuit board of the light module is electrically connected to the circuit of the heater pad.

According to preferred embodiments of the heating and lighting unit the thickness of the light module corresponds to the thickness of the heater pad, and/or the thickness of the light module is below 1 mm, preferably below 0.8 mm, and/or the light module is not extending beyond the heater pad.

It is also preferred that the light module has no power stripes, and/or the light module is connected to a remote power source and/or control unit via the heater pad.

The invention further provides a glass assembly for a rear view device for a vehicle comprising a reflective element, a carrier plate for the reflective element and a heating and lighting unit of the invention, with the heating and lighting unit being arranged between the reflective element and the carrier plate.

According to the invention it is preferred that the reflective element comprises a glass carrying a reflective layer within a mirror region, with preferably the reflective layer being at least partly removed or spared out in at least one display region overlapping the light module, such that light from the light module can shine through the reflective element within the display region.

Glass assemblies of the invention can be further characterized by an icon in the display region provided by either the reflective layer or a further layer, in particular a paint, on the glass, and/or a diffuser in the display region provided by another further layer, in particular another paint, on the glass, with preferably the glass surface on the side of the light module carrying the icon layer and the icon layer carrying the diffuser layer.

With the invention it is also proposed that the heating and lighting unit is hold between the reflective element and the carrier plate, with both the reflective element and the carrier plate being substantially flat and having the substantially flat heating and lighting unit arranged there between without any recess for the light module.

Finally, the invention also provides a rear view device, in particular rearview mirror device, for a vehicle comprising a heating and lighting unit and/or a glass assembly of the invention with an electrical connection of the heating and lighting unit to a power source and/or control unit, preferably arranged within the vehicle.

With the invention it is possible to provide a very thin heating and lighting unit. This is in particular due to the omission of any power stripes on the light module, in particular its printed circuit board. Using a flexible printed circuit board for the light module is facilitating to insert the light module into a heater pad to form the heating and lighting unit. The heater pad as such only has to be provided with a hole for the insertion of the light module and contacts for contacting the flexible printed circuit board of the light module. Via the heater pad the light module is provided with power as well as control signals from a respective power source and/or control unit which can be arranged at a distance, and the heater pad is provided with power stripes and/or an interface for a respective connection.

The overall thickness of the heating and lighting unit can be in the region of 1 mm, even below 0,8 mmm. This facilitates the placement of said unit in a glass assembly. In fact, the unit is substantially in form of a flat layer which can be arranged between a reflective element and a carrier plate of the glass assembly. The carrier plate does not have to be provided with any box, hole or the like to house the light module, which reduces production time and costs.

The reflective element of the glass assembly can be provided by a glass, which could also be a plastic glass, provided with an icon and a diffuser in a display region, in particular providing information and/or signals. Outside the display region the glass can be provided with a reflective layer to act as a mirror. The icon can be provided by a paint. Also the diffuser can be provided by a paint in order to reduce the overall thickness of the glass assembly.

The glass assembly of the invention is of particular use within a rearview mirror for a vehicle, with the display region serving to provide a driver of the vehicle with drive assistant signals, like informing the driver of other vehicles approaching within a blind zone.

Reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents, and other embodiments, which may be included within the spirit and scope of the invention as defined by the appended claims.
- Fig. 1: shows a cross section of a glass assembly of a rearview mirror of the present invention; and
- Fig. 2: shows a partially cut away view on a heating and lighting unit of a glass assembly of another rearview mirror of the present invention.

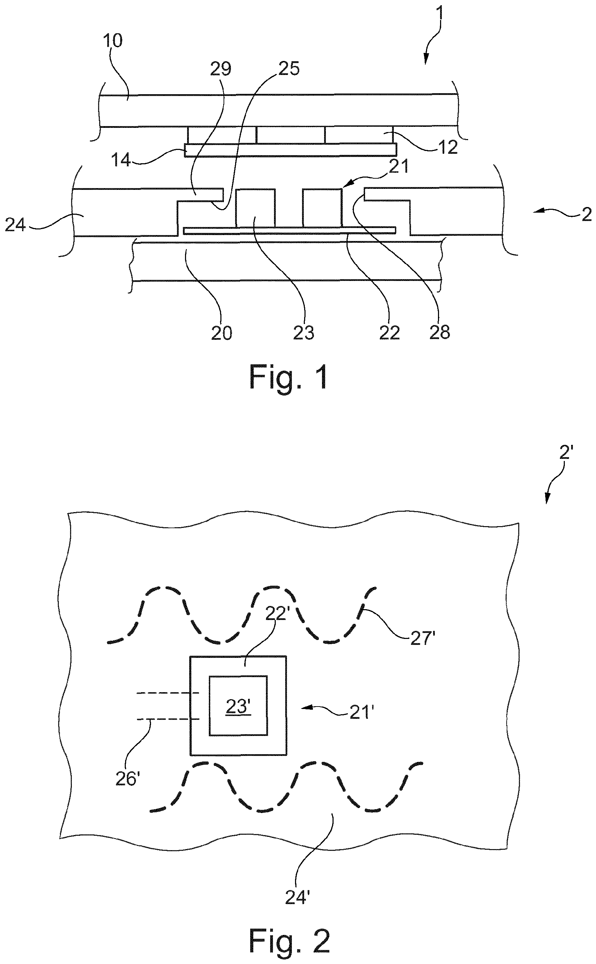

Fig. 1 shows a glass assembly 1 of the invention, which comprises a heating and lighting unit 2 packed between a glass 10 and its carrier plate 20. The glass 10 as well as the carrier plate 20 can have a disc form without being provided with any recess or the like to house at least a part of the heating and lighting unit 2.

The glass 10, which can be in form of a plastic glass, has two regions, namely a mirror region within which it carries a reflective layer (not shown) and a display region, within which it carries an icon 12 and a diffuser 14. Both, the icon 12 as well as the diffuser 14 can be provided by a paint in order reduce the overall thickness.

The heating and lighting unit 2 comprises a light module 21 arranged with a heater pad 24.

The light module 21 comprises a flexible printed circuit board 22 for two LEDs 23, but no power stripes. The light module 21 rather makes usage of the power stripes of the heater pad 24 which is connected therewith via contacts 25. This is possible because the light module 21 is arranged within recess 28 of the heater pad 24 having shoulders 29 overlapping the light module 21 in the region of the printed circuit board 22.

The LEDs 23 of the light module 21 are arranged in the display region of the glass assembly 1 such that light emitted by the LEDs 23 can pass the diffuser 14, the icon 12 and finally the glass 10 in order to provide signals on the surface of the glass 10. The diffuser 24 ensures a homogenous illumination of the display region.

Fig. 2 depicts a heating and lighting unit 2' of the invention, with a heater pad 24' having a circuit comprising heater lines 27' and power stripes 26'. The power stripes 26' are electrically connected to a flexible printed circuit board 22' of a light module 21'. The printed circuit board 22' carries an LED 23'.

The heating and lighting unit 2, 2' of the invention is preferably arranged within a glass assembly 1 to be used for an exterior rearview device, in particular for providing drive assistance.

The invention has been described in detail with reference to exemplary embodiments thereof. However, it will be appreciated by those skilled in the art that changes may be made in these embodiments without departing from the principles of the invention, the scope of which is defined in the appended claims and their equivalents.

### Reference Signs

- 1: glass assembly
- 2, 2': heating and lighting unit
- 10: glass
- 12: icon
- 14: diffusor
- 20: carrier plate
- 21, 21': light module
- 22, 22': printed circuit board
- 23,23': LED
- 24, 24': heater pad
- 25: contact
- 26': power stripe
- 27': heater line
- 28: recess
- 29: shoulder

## Claims

1. Heater pad (24, 24'), comprising
a circuit comprising at least one heating line (27') and being connectable with a power source and/or a control unit,
at least one recess (28) into which a light module (21, 21') is to be inserted, and contacts (25) for contacting a printed circuit board of the light module (21, 21'),
**characterised in that**
the circuit is electrically connectable to the printed circuit board of the light module (21, 21'), which has no power stripes, via the contacts (25), which are provided in an area overlapping and holding the light module (21, 21').

2. Heater pad according to claim 1, further comprising
power stripes (26) to be connected to the printed circuit board of the light module (21, 21').

3. Heater pad according to claim 1 or 2, wherein
the recess (28) comprises a through hole, and
the area is in form of an extension or shoulder (29) next to the recess (28).

4. Heating and lighting unit (2, 2'), comprising a heater pad (24, 24') according to one of the preceding claims and a light module (21, 21') having a printed circuit board with at least one LED (23, 23') and having no power stripes, wherein
the light module (21, 21') is inserted into the recess (28) of the heater pad (24, 24'), and
the printed circuit board of the light module (21, 21') is electrically connected to the circuit of the heater pad (24, 24').

5. Heating and lighting unit according to claim 4, wherein
the printed circuit board of the light module (21, 21') is flexible.

6. Heating and lighting unit according to claim 4 or 5, wherein
the thickness of the light module (21, 21') corresponds to the thickness of the heater pad (24, 24'), and/or
the thickness of the light module (21, 21') is below 1 mm, and/or
the light module (21, 21') is not extending beyond the heater pad (24, 24').

7. Heating and lighting unit according to one of the claims 4 to 6, wherein
the light module (21, 21') is connected to a remote power source and/or control unit via the heater pad (24, 24').

8. Glass assembly (1) for a rearview mirror device for a vehicle, comprising a reflective element (10), a carrier plate (20) for the reflective element and a heating and lighting unit (2, 2') of one of the claims 4 to 7, with
the heating and lighting unit (2, 2') being arranged between the reflective element (10) and the carrier plate (20).

9. Glass assembly of claim 8, wherein
the reflective element comprises a glass (10) carrying a reflective layer within a mirror region.

10. Glass assembly of claim 9, wherein
the reflective layer is at least partly removed or spared out in at least one display region overlapping the light module (21, 21'), such that light from the light module (21, 21') can shine through the reflective element within the display region.

11. Glass assembly of claim 10, further comprising
an icon (12) in the display region provided by either the reflective layer or a further layer on the glass (10), and/or
a diffuser (14) in the display region provided by another further layer on the glass.

12. Glass assembly of claim 11, wherein the glass surface on the side of the light module (21, 21') carries the icon layer and the icon layer carries the diffuser layer, and/or the further layer and/or the other further lay is a paint.

13. Glass assembly of one of the claims 8 to 12, wherein
the heating and lighting unit (2, 2') is hold between the reflective element (10) and the carrier plate (20), with
both the reflective element (10) and the carrier plate (20) being substantially flat and having the substantially flat heating and lighting unit (2, 2') arranged there between without any recess for the light module (21, 21') being provided by the carrier plate (20).

14. Rearview device, in particular rearview mirror device, for a vehicle comprising a heating and lighting unit (2, 2') of one of the claims 4 to 7 and/or a glass assembly (1) of one of the claims 8 to 13, with an electrical connection of the heating and lighting unit (2, 2') to a power source and/or a control unit.

## Patentansprüche

1. Heizpad (24, 24'), umfassend
eine Schaltung, die mindestens eine Heizleitung (27') umfasst und mit einer Stromquelle und/oder einer Steuereinheit verbindbar ist,
mindestens eine Aussparung (28), in die ein Lichtmodul (21, 21') gesteckt werden soll, sowie Kontakte (25) zum Herstellen eines Kontakts mit einer Leiterplatte des Lichtmoduls (21, 21 '),
**dadurch gekennzeichnet, dass** die Schaltung mit der Leiterplatte des Lichtmoduls (21, 21'), das keine Stromflachleitungen aufweist, über die Kontakte (25) elektrisch verbindbar ist, die in einem Bereich vorgesehen sind, der das Lichtmodul (21, 21') überdeckt und hält.

2. Heizpad nach Anspruch 1, ferner umfassend
Stromflachleitungen (26), die an die Leiterplatte des Lichtmoduls (21, 21') angeschlossen werden sollen.

3. Heizpad nach Anspruch 1 oder 2, wobei die Aussparung (28) eine Durchgangsbohrung umfasst und der Bereich die Form eines Ansatzes oder Schulter (29) neben der Aussparung (28) aufweist.

4. Heiz- und Beleuchtungseinheit (2, 2'), die ein Heizpad (24, 24') nach einem der vorhergehenden Ansprüche und ein Lichtmodul (21, 21') umfasst, das eine Leiterplatte mit mindestens einer LED (23, 23') aufweist und keine Stromflachleitungen aufweist, wobei das Lichtmodul (21, 21') in die Aussparung (28) des Heizpads (24, 24') gesteckt ist und die Leiterplatte des Lichtmoduls (21, 21') elektrisch mit der Schaltung des Heizpads (24, 24') verbunden ist.

5. Heiz- und Beleuchtungseinheit nach Anspruch 4, wobei die Leiterplatte des Lichtmoduls (21, 21') flexibel ist.

6. Heiz- und Beleuchtungseinheit nach Anspruch 4 oder 5, wobei die Dicke des Lichtmoduls (21, 21') der Dicke des Heizpads (24, 24') entspricht und/oder die Dicke des Lichtmoduls (21, 21') unter 1 mm beträgt und/oder das Lichtmodul (21, 21') nicht über das Heizpad (24, 24') hinausragt.

7. Heiz- und Beleuchtungseinheit nach einem der Ansprüche 4 bis 6, wobei das Lichtmodul (21, 21') mit einer externen Stromquelle und/oder Steuereinheit über das Heizpad (24, 24') verbunden ist.

8. Glasanordnung (1) für eine Rückspiegelvorrichtung für ein Fahrzeug, die ein reflektierendes Element (10), eine Trägerplatte (20) für das reflektierende Element und eine Heiz- und Beleuchtungseinheit (2, 2') nach einem der Ansprüche 4 bis 7 umfasst, wobei die Heiz- und Beleuchtungseinheit (2, 2') zwischen dem reflektierenden Element (10) und der Trägerplatte (20) angeordnet ist.

9. Glasanordnung nach Anspruch 8, wobei das reflektierende Element ein Glas (10) umfasst, das in einem Spiegelbereich eine reflektierende Schicht trägt.

10. Glasanordnung nach Anspruch 9, wobei die reflektierende Schicht in zumindest einem Anzeigebereich, der das Lichtmodul (21, 21') überdeckt, derart zumindest teilweise entfernt oder ausgespart ist, dass Licht von dem Lichtmodul (21, 21') innerhalb des Anzeigebereichs durch das reflektierende Element hindurchstrahlen kann.

11. Glasanordnung nach Anspruch 10, ferner umfassend ein Symbol (12) in dem Anzeigebereich, das entweder von der reflektierenden Schicht oder einer weiteren Schicht auf dem Glas (10) bereitgestellt ist, und/oder einen Diffusor (14) in dem Anzeigebereich, der von einer anderen weiteren Schicht auf dem Glas bereitgestellt ist.

12. Glasanordnung nach Anspruch 11, wobei die Glasoberfläche auf der Seite des Lichtmoduls (21, 21') die Symbolschicht trägt und die Symbolschicht die Diffusorschicht trägt und/oder die weitere Schicht und/oder die andere weitere Schicht ein Anstrichstoff ist.

13. Glasanordnung nach einem der Ansprüche 8 bis 12, wobei die Heiz- und Beleuchtungseinheit (2, 2') zwischen dem reflektierenden Element (10) und der Trägerplatte (20) gehalten ist, wobei
sowohl das reflektierende Element (10) als auch die Trägerplatte (20) im Wesentlichen eben sind und die im Wesentlichen ebene Heiz- und Beleuchtungseinheit (2, 2') dazwischen angeordnet ist, ohne dass die Trägerplatte (20) eine Aussparung für das Lichtmodul (21, 21') vorsieht.

14. Rückblickvorrichtung, insbesondere Rückspiegelvorrichtung, für ein Fahrzeug, die eine Heiz- und Beleuchtungseinheit (2, 2') nach einem der Ansprüche 4 bis 7 und/oder eine Glasanordnung (1) nach einem der Ansprüche 8 bis 13 umfasst, mit einer elektrischen Verbindung der Heiz- und Beleuchtungseinheit (2, 2') zu einer Stromquelle und/oder einer Steuereinheit.

## Revendications

1. Patin chauffant (24, 24'), comprenant
un circuit comportant au moins une câble chauffante (27') et pouvant être relié à une source d'alimentation et/ou à une unité de commande,
au moins une niche (28) dans laquelle un module d'éclairage (21, 21') doit être inséré, et des contacts (25) destinés à contacter une carte de circuit imprimé du module d'éclairage (21, 21'),
**caractérisé en ce que** le circuit peut être relié électriquement à la carte de circuit imprimé du module d'éclairage (21, 21'), qui ne comporte de bandes d'alimentation, par l'intermédiaire des contacts (25) prévus dans une zone de chevauchement et de maintien du module d'éclairage (21, 21').

2. Patin chauffant selon la revendication 1, comprenant en outre des bandes d'alimentation (26) à raccorder à la carte de circuit imprimé du module d'éclairage (21, 21').

3. Patin chauffant selon la revendication 1 ou la revendication 2, où la niche (28) présente un trou traversant, et où la zone a la forme d'une extension ou d'un épaulement (29) proche de la niche (28).

4. Unité de chauffage et d'éclairage (2, 2'), comprenant un patin chauffant (24, 24') selon l'une des revendications précédentes et un module d'éclairage (21, 21') pourvu d'une carte de circuit imprimé avec au moins une LED (23, 23') et dépourvu de bandes d'alimentation, où le module d'éclairage (21, 21') est inséré dans la niche (28) du patin chauffant (24, 24'), et la carte de circuit imprimé du module d'éclairage (21, 21') est reliée électriquement au circuit du patin chauffant (24, 24').

5. Unité de chauffage et d'éclairage selon la revendication 4, où la carte de circuit imprimé du module d'éclairage (21, 21') est flexible.

6. Unité de chauffage et d'éclairage selon la revendication 4 ou la revendication 5, où l'épaisseur du module d'éclairage (21, 21') correspond à l'épaisseur du patin chauffant (24, 24'), et/ou l'épaisseur du module d'éclairage (21, 21') est inférieure à 1 mm, et/ou le module d'éclairage (21, 21') ne s'étend pas au-delà du patin chauffant (24, 24').

7. Unité de chauffage et d'éclairage selon l'une des revendications 4 à 6, où le module d'éclairage (21, 21') est relié à une source d'alimentation distante et/ou à une unité de commande par l'intermédiaire du patin chauffant (24, 24').

8. Ensemble en verre (1) pour un dispositif de miroir de rétroviseur pour un véhicule, comprenant un élément réfléchissant (10), une plaque de support (20) pour l'élément réfléchissant et une unité de chauffage et d'éclairage (2, 2') selon l'une des revendications 4 à 7, l'unité de chauffage et d'éclairage (2, 2') étant disposée entre l'élément réfléchissant (10) et la plaque de support (20).

9. Ensemble en verre selon la revendication 8, où l'élément réfléchissant comprend un verre (10) portant une couche réfléchissante à l'intérieur d'une zone de miroir.

10. Ensemble en verre selon la revendication 9, où la couche réfléchissante est au moins partiellement retirée ou épargnée dans au moins une zone d'écran chevauchant le module d'éclairage (21, 21 '), de telle manière que la lumière du module d'éclairage (21, 21') peut rayonner au travers de l'élément réfléchissant à l'intérieur de la zone d'écran.

11. Ensemble en verre selon la revendication 10, comprenant en outre une icône (12) dans la zone d'écran, réalisée soit par la couche réfléchissante soit par une couche supplémentaire sur le verre (10), et/ou un diffuseur (14) dans la zone d'écran, réalisée par une autre couche supplémentaire sur le verre.

12. Ensemble en verre selon la revendication 11, où la surface en verre sur le côté du module d'éclairage (21, 21') supporte la couche d'icône, et la couche d'icône supporte la couche de diffuseur, et/ou la couche supplémentaire et/ou l'autre couche supplémentaire est une peinture.

13. Ensemble en verre selon l'une des revendications 8 à 12, où l'unité de chauffage et d'éclairage (2, 2') est maintenue entre l'élément réfléchissant (10) et la plaque de support (20), l'élément réfléchissant (10) ainsi que plaque de support (20) étant sensiblement plans et ayant l'unité de chauffage et d'éclairage (2, 2') sensiblement plane disposée entre eux sans aucune niche pour le module d'éclairage (21, 21') réalisée par la plaque de support (20).

14. Dispositif de rétroviseur, en particulier dispositif de miroir de rétroviseur, pour un véhicule comprenant une unité de chauffage et d'éclairage (2, 2') selon l'une des revendications 4 à 7 et/ou un ensemble en verre (1) selon l'une des revendications 8 à 13, avec une liaison électrique de l'unité de chauffage et d'éclairage (2, 2') à une source d'alimentation et/ou une unité de commande.
